# EUROPEAN PATENT SPECIFICATION

(11) **EP 3 793 950 B1**
(45) Date of publication and mention of the grant of the patent: **04.11.2026**
(21) Application number: 19803276.5
(22) Date of filing: 16.05.2019
(51) Int. Cl.: C02F 1/54, B01D 9/02, B01J 8/24, C01B 25/45, C02F 1/52, C02F 1/66, C02F 101/10

(54) **TREATMENT OF PHOSPHATE-CONTAINING WASTEWATER**
BEHANDLUNG VON PHOSPHATHALTIGEM ABWASSER
TRAITEMENT D'EAUX USÉES CONTENANT DU PHOSPHATE

(30) Priority: 16.05.2018 US 201862672563 P
(43) Date of publication of application: 24.03.2021
(73) Proprietor: Ostara Nutrient Recovery Technologies Inc., Vancouver, British Columbia V6E 2R1 (CA)
(72) Inventor: PRASAD, Melahalli Sathyanarayana Ram, Dr. Lithia, Florida 33547 (US); BRITTON, Ahren, Vancouver, British Columbia V7J 3T4 (CA); VERIGIN, Mikaela, Vancouver, British Columbia V7T 1M7 (CA)
(74) Representative: Eisenführ Speiser
(86) International application number: PCT/CA2019/050667
(87) International publication number: WO 2019/218075

(56) References cited:
- EP-A1- 1 713 732
- EP-A1- 3 112 320
- EP-B1- 1 713 732
- WO-A1-2015/061852
- WO-A1-94/00391
- AU-A4- 2011 100 255
- CA-A1- 2 138 259
- US-B2- 7 622 047

## Description

### Technical Field

The invention relates to methods for precipitating struvite or a struvite analog. Some embodiments provide methods for crystallizing materials such as struvite from aqueous solutions such as wastewater or process water. For example, some embodiments relate to methods for precipitating struvite or a struvite analog to form crystals while controlling fines.

### Background

Reactors in general and fluidized bed reactors in particular have been used to remove and recover phosphorous from solutions such as wastewater and process water. Aqueous solutions from some sources contain significant concentrations of phosphorus, often in the form of phosphate. Such aqueous solutions may come from a wide range of sources. These include sources such as leaching from landfill sites, runoff from agricultural land, effluent from industrial processes, industrial process water, municipal wastewater, animal wastes, phosphogypsum pond water, and the like. Such aqueous solutions, if released into the environment without treatment, can result in excess phosphorus levels in the receiving waters.

Various phosphorus removal and recovery technologies exist. Some of the technologies provide fluidized bed reactors for removing phosphorus from aqueous solutions by producing struvite (MgNH₄PO₄•6H₂O) or a struvite analog or a phosphate compound in the form of pellets. Magnesium may be added to the reactor to form struvite. Struvite can be formed by the reaction:

Mg²⁺ + NH₄⁺ + PO₄³⁻ + 6H₂0 ↔ MgNH₄PO₄•6H₂O

Koch et al., Fluidized Bed Wastewater Treatment, US Patent No. 7622047, describes example reactors and methods that may be applied to remove and recover phosphorus from aqueous solutions.

A difficulty sometimes exhibited in crystallization reactions is that the sizes of particles produced by the reaction may not be as desired. For example, under certain operating conditions, a reactor may produce a large amount of very tiny crystals ("fines") where larger crystals are desired. Excessive production of fines can result in low capture of phosphate since fines can be carried out with effluent from a crystallization reactor. Crystal sizes are affected by a wide range of factors including flow conditions, chemical composition, temperature, etc. For example, if the load (i.e. the mass of phosphorus (PO₄-P) added to a reactor (or portion thereof) per unit of time) is too high, then undesirable fines will be formed. Load limitations impact the volume of aqueous solution that may be treated per unit time, thereby impacting struvite production as a function of time.

References that describe various crystallization processes include: US8245625; US7942939; WO2006082341; US6946572; US6364914; WO9837938; US4666527; US3419899; US2209019; US4159194; US4263010; US5124265; US6660049; US5663456; AU2004320909; WO2012022099; WO201234255; WO94/00391; EP 1 713 732 A1, EP 3 112 320 A1.

There remains a need for effective reactors and methods for removing and recovering dissolved materials from solutions. There remains a particular need for effective reactors and methods suited to making large particles of marginally soluble substances such as struvite, struvite analogs, and calcium phosphate.

The foregoing examples of the related art and limitations related thereto are intended to be illustrative and not exclusive. Other limitations of the related art will become apparent to those of skill in the art upon a reading of the specification and a study of the drawings.

### Summary

The present invention is defined in the attached claims, and is described in more detail hereinbelow. The following embodiments and aspects thereof are described and illustrated in conjunction with apparatus, systems, tools and methods which are meant to be exemplary and illustrative, not limiting in scope. In various embodiments, one or more of the above-described problems have been reduced or eliminated, while other embodiments are directed to other improvements.

Aspects of the present invention relate to methods for precipitating struvite or a struvite analog. The methods have example application to growing crystals of materials such as struvite and struvite analogs.

Methods according to some embodiments operate to grow particles while avoiding or minimizing the production of fines, by injecting an aqueous slurry of a low solubility source of magnesium (Mg). By maintaining a low concentration of fines, growth rates of larger particles may be enhanced and the loss of phosphorus by way of fines may be minimized or eliminated.

Some aspects of the invention provide methods in which a reactor is operated under high growth conditions. For example, the high growth conditions may correspond to loading conditions for a substance being produced. In some embodiments loading is above a threshold to achieve a high growth rate of crystals. For example, in some embodiments the loading may be 5 g PO₄-P/min/m³ or more or 50 g PO₄-P/min/m³ or more or 100 g PO₄-P/min/m³ or more or 250 g PO₄-P/min/m³ or more in a reactor (or a portion of the reactor).

In some embodiments a supersaturation ratio (ratio of the product of concentrations of constituents of the substance to the product of concentrations corresponding to equilibrium) is above a threshold to achieve a high growth rate of crystals. For example, in some embodiments, the supersaturation ratio for struvite or another material being crystallized may be 2 or more or 3 or more or 5 or more in the reactor. In some embodiments the substance is sparingly soluble in aqueous solution. Concentration of fines may be maintained below a threshold, thereby maintaining a growth rate of larger particles, by injecting an aqueous slurry of a low solubility source of magnesium (Mg) into the reactor (or portion of the reactor) as described herein.

The method for precipitating struvite or a struvite analog from an aqueous solution involves introducing the aqueous solution containing the dissolved materials into a reactor and introducing a source of magnesium (Mg) into the reactor. The source of Mg is introduced in a quantity sufficient to cause the dissolved materials in the aqueous solution to precipitate into crystals. The source of Mg is in the form of particles of a Mg-containing material. The source of Mg has a solubility in the aqueous solution of less than about 1 g/L and/or the concentration of Mg in the reactor that is available for reaction to yield struvite (including solids in the particles of Mg-containing material) may be less than about 0.03 mol/L.

The source of Mg is introduced to the reactor as a slurry. The slurry may be prepared by adding water to the source of Mg and soaking the source of Mg for a hydration time before introducing the hydrated slurry into the reactor. The source of Mg may, for example, have a solubility in aqueous solvent of about 5 mg/L to about 500 mg/L, or about 5 mg/L to about 150 mg/L. The concentration of the Mg in the reactor may be about 0.1 mmol/L to about 0.03 mol/L after introduction of the slurry. The source of Mg may, for example, have a particle size of less than 50 µm, or about 10 µm to about 30 µm, or about 100 mesh to about 400 mesh or about 17SGN to 100 SGN, for example.

In some embodiments, the method further includes maintaining the aqueous solution at a pH greater than about 7. In some embodiments, the pH of the aqueous solution is maintained by adding an acid or a base to the hydrated slurry. In some embodiments, the pH of the aqueous solution is maintained by controlling the amount of the source of Mg present in the aqueous solution. The amount of the source of Mg present in the aqueous solution may be controlled by the steps of: measuring a pH of the aqueous solution in real-time, comparing the measured pH with a target pH (or "setpoint" pH) and adjusting the pH by introducing the source of Mg to the aqueous solution such that the pH of the aqueous solution is controlled to be equal to or close to the target pH. In some embodiments, the source of Mg is introduced into the reactor at a preset timed interval such as intervals of about 30 seconds to about 5 minutes. According to the invention, the source of Mg is a low solubility source of Mg. The low solubility source of Mg may, for example, be MgO, Mg(OH)₂, or a magnesium carbonate. Examples of magnesium carbonate may include one or more of anhydrous salt magnesite (MgCO₃), barringtonite (MgCO₃•2H₂O), nesquehonite (MgCO₃•3H₂O), lansfordite (MgCO₃•5H₂O), artinite (MgCO₃•Mg(OH)2•3H₂O), hydromagnesite (4 MgCO₃Mg(OH)2•4H₂O), dypingite (4 MgCO₃Mg(OH)2•5H₂O), dolomitic lime, and limestone.

In some embodiments, the low solubility source of Mg is MgO. MgO may be prepared in any suitable manner. In some embodiments MgO is prepared at a calcination temperature for a period of time sufficient to produce MgO particles. The calcination temperature may, for example, be in the range of about 600°C to about 1200°C. The period of time used to produce MgO particles may, for example, be in the range of about 1 to 3 hours. The hydration time may, for example, be between about 15 minutes and about 36 hours.

According to the invention, an acid is added to the hydrated slurry before introducing the hydrated slurry into the reactor. The acid is added in about 0.4:1 molar equivalents. The acid may be a strong acid such as any of hydrochloric acid (HCl) and sulphuric acid (H₂SO₄) and nitric acid (HNO₃). In some embodiments, the acid is a weak acid such as any of acetic acid, citric acid or oxalic acid.

In some embodiments, the source of Mg is reacted with the aqueous solution for a reaction time of about 30 minutes to about 60 minutes.

In some embodiments, the aqueous solution has a phosphorus concentration in the range of about 40 mg/L to about 10,000 mg/L.

In some embodiments, a high solubility source of Mg such as MgCl₂ or MgSO₄ is introduced in the reactor in addition to introduction of the low solubility source of Mg. The high solubility source of Mg and the low solubility source of Mg may be introduced into the reactor at the same time.

A fluidized bed type reactor for precipitating dissolved materials from an aqueous solution is not part of the present invention but related thereto. The fluidized bed reactor may comprise a reaction tank and a hydration tank. The reaction tank may include an inlet and an outlet. The hydration tank may be associated with the reaction tank and configured for hydrating a source of magnesium (Mg) in an aqueous solvent and introducing the source of Mg as a hydrated slurry into the reaction tank. In some embodiments, the reactor further includes a control valve. The control valve may be configured to control a flow of the hydrated slurry from the hydration tank to the reaction tank. In some embodiments, the reactor further includes a recycling path. The recycling path may be configured to take a solution from one part of the reaction tank and to return at least a portion of the removed solution to another part of the reaction tank. The recycling path may optionally include a fines treatment tank. In some embodiments, a solids separation device is upstream from the fines treatment tank. The solids separation device may be configured to separate solids from liquid in the recycling path.

In some embodiments, the reactor further includes a pH probe. The pH probe may be configured to measure a pH of the aqueous solvent in the reaction tank. In some embodiments, a controller may be configured to receive an input from the pH probe. The controller may be configured to control the opening and closing of the control valve in response to a deviation of the pH of the aqueous solvent in the reaction tank from a desired pH setpoint.

In some embodiments, the hydration tank includes a first acid injector. The first acid injector may be configured for controllably dosing an acid into the slurry in the hydration tank. In some embodiments, the reactor includes a second acid injector. The second acid injector may be configured for controllably dosing an acid into solution flow in the recycling path. The reactor may also include a base injector. The base injector may be configured for controllably dosing a base into solution flow in the reaction tank. In some embodiments, the base injector is located downstream of the acid injector in the recycling path.

Another aspect provides a method for making struvite or a struvite analog. The method comprises providing a reactor vessel wherein, in at least a portion of the reactor vessel a cross sectional area of the reactor vessel increases with elevation and maintaining a size-segregated fluidized bed of pellets in the portion of the reactor vessel by flowing a solution comprising phosphate upwardly through the portion of the reactor. An upward fluid velocity of the flowing solution decreases with elevation in the portion of the reactor. The method introduces fine particles of a low solubility source of magnesium into the reactor and allows the fine particles to disperse in the fluidized bed. Some of the pellets are removed from the fluidized bed. The fine particles may for example comprise magnesium oxide. The fine particles may, for example have sizes of SGN 100 or less. The fine particles may for example have diameters of 0.1mm or less.

In the method, pH may be maintained at a pH setpoint which is equal to or greater than pH 7.5 in at least a part of the reactor vessel. The pH setpoint may be at least pH 8 in some cases.

The method may involve recycling the solution in the reactor vessel through a recycle path extending from an elevation in the reactor vessel above the fluidized bed to an elevation in the reactor vessel that is below the fluidized bed. Optionally the method includes comprising capturing or redissolving particles of struvite in the recycle path.

The fine particles of a low solubility source of magnesium are introduced into the reactor vessel as a slurry of the fine particles. The slurry may be hydrated before it is introduced into the reactor vessel. Hydration may be performed by mixing the fine particles with aqueous solvent (e.g. water) and allowing the particles to remain in contact with the water for a period of at least a few minutes before introducing the slurry into the reactor vessel. The slurry may be injected into the reactor vessel at a location below the fluidized bed. In some cases an acid is mixed with the slurry prior to introducing the slurry into the reactor vessel. A pH at a location in the reactor vessel may be controlled by controlled addition of the slurry. In some cases the slurry buffers at an alkaline pH (e.g. at least pH 7.5 or at least about pH 8).

In addition to the exemplary aspects and embodiments described above, further aspects and embodiments will become apparent by reference to the drawings and by study of the following detailed descriptions.

### Brief Description of the Drawings

Exemplary embodiments are illustrated in referenced figures of the drawings. It is intended that the embodiments and figures disclosed herein are to be considered illustrative rather than restrictive.
FIG. 1A is a schematic diagram of an example reactor apparatus (not part of the present invention but related thereto). FIG. 1B is a schematic diagram of an example reactor apparatus (not part of the present invention but related thereto).
FIG. 2 is a flowchart of a method according to an example embodiment.
FIG. 3 is a graph showing the relationship of phosphorus (P) removal (%) as a function of reaction time for an aqueous solution treated with sources of Mg.

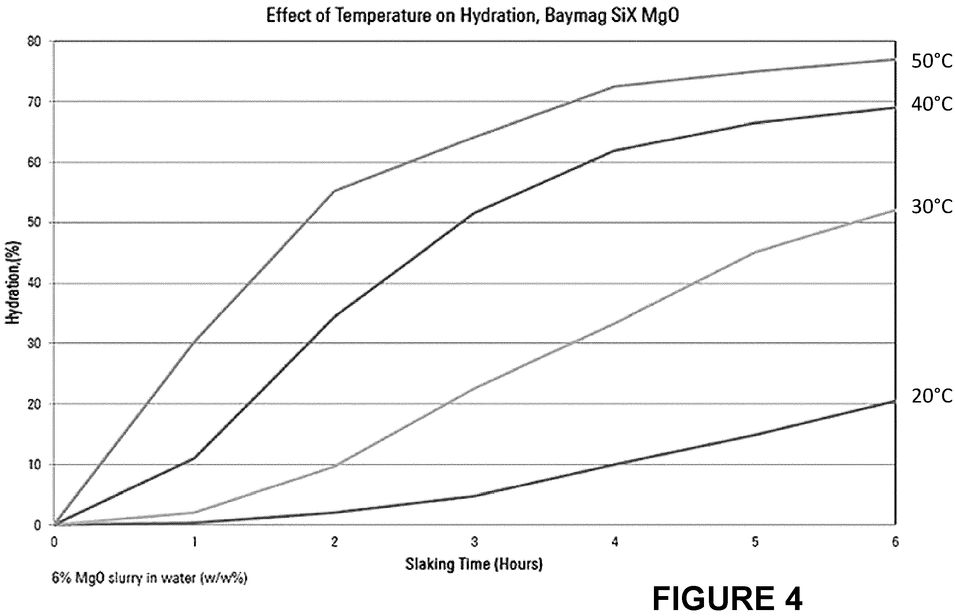

FIG. 4 is a graph showing the effect of temperature on hydration of an aqueous slurry of MgO.
FIG. 5 is a graph showing the effect of aqueous slurries of sources of Mg on P removal (%).
FIG. 6 is a graph showing the effect of aqueous slurries of sources of Mg on final Mg concentration.
FIG. 7 is a graph showing the relationship of P removal (%) as a function of hydration time for aqueous slurries of sources of Mg.

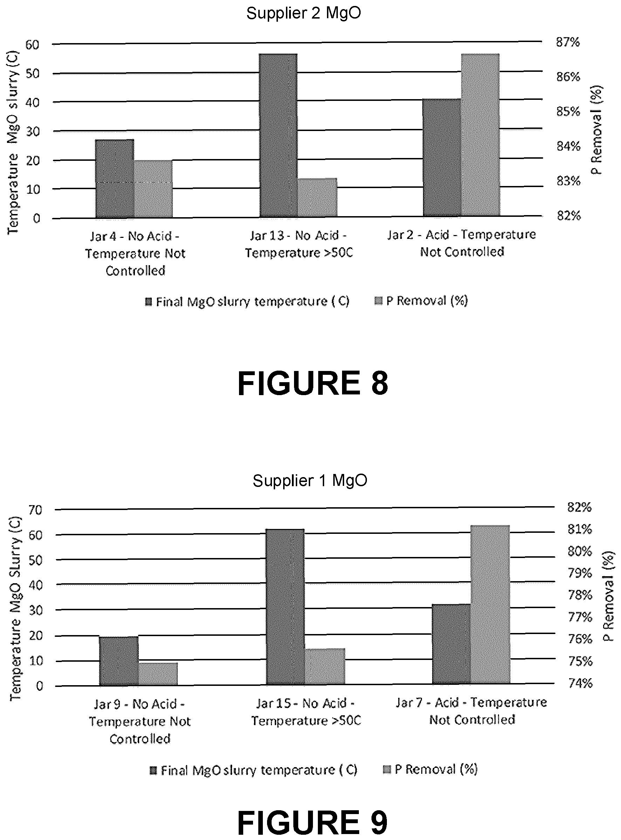

FIG. 8 is a graph showing the effect of hydration temperature on P removal (%) by aqueous slurries of a natural magnesite ore derived light burned Magnesium Oxide product.
FIG. 9 is a graph showing the effect of hydration temperature on P removal (%) by aqueous slurries of a synthetically derived light burned magnesium oxide product.
FIG. 10 is a graph showing the relationship of P removal (%) as a function of reaction time for aqueous slurries of sources of Mg.
FIG. 11 is a graph showing the relationship of P removal (%) as a function of pH for aqueous slurries of sources of Mg.
FIG. 12 is a graph showing the relationship of P removal (%) as a function of reaction time for aqueous slurries of sources of Mg.

### Description

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, rather than a restrictive, sense.

This invention relates to the crystallization of materials from solution. Aspects provide crystallization reactors (not part of the present invention but related thereto) and methods as well as apparatus (not part of the present invention) and methods for reducing the concentration of fines in crystallization reactors. Other aspects provide crystallization reactors (not part of the present invention but related thereto) and methods for growing crystals of materials (not part of the present invention but related thereto) that have poor solubility (struvite and struvite analogs). The invention may be applied to controlling fines in the crystallization of any of a wide range of chemical substances from solution. Precipitation of struvite from aqueous solutions is used in this disclosure as a non-limiting example application of the invention.

Some embodiments of the invention in the following description relate to crystallization reactors (not part of the present invention but related thereto) and methods wherein magnesium is added to precipitate phosphorus in wastewater in the form of struvite or struvite analogs. For example, some aspects provide crystallization reactors (not part of the present invention but related thereto) and methods in which magnesium is added to precipitate phosphorus from wastewater in the form of struvite (MgNH₄PO₄•6H₂O) according to the following reaction:

Mg²⁺ + NH₄+ + PO₄³⁻ + 6H₂0 ↔ MgNH₄PO₄•6H₂O

The struvite may have the form of pellets. The pellets may for example have sizes of about 0.1 mm to 3 mm or more. These examples coincide with embodiments having significant commercial utility. The scope of the invention, however, is not limited to these examples.

The term "aqueous solution" or "solution" is used in the following description and claims to include aqueous solutions such as industrial and municipal wastewater, industrial process water, leachate, runoff, animal wastes, effluent, phospho-gypsum pond water, or the like. Some embodiments provide methods for treating municipal sewage and/or animal waste. Some embodiments provide methods for treating other kinds of wastewater. Some embodiments provide methods for crystallizing materials using feedstock other than wastewater.

The term "load" or "loading" is used in the following description and claims to mean the mass of phosphorus (PO₄-P) added to a reactor (or portion of the reactor) per unit of time.

The term "saturation" is used in the following description and claims to mean a solution at its solution equilibrium point that cannot dissolve any more of a solute under present conditions.

The term "supersaturation" is used in the following description and claims to mean a solution containing more of a dissolved solute than could otherwise be dissolved by the solvent under present conditions.

One aspect of the invention relates to methods for precipitating struvite and struvite analogs. Some aspects of the invention relate to methods for operating a reactor under high growth conditions.

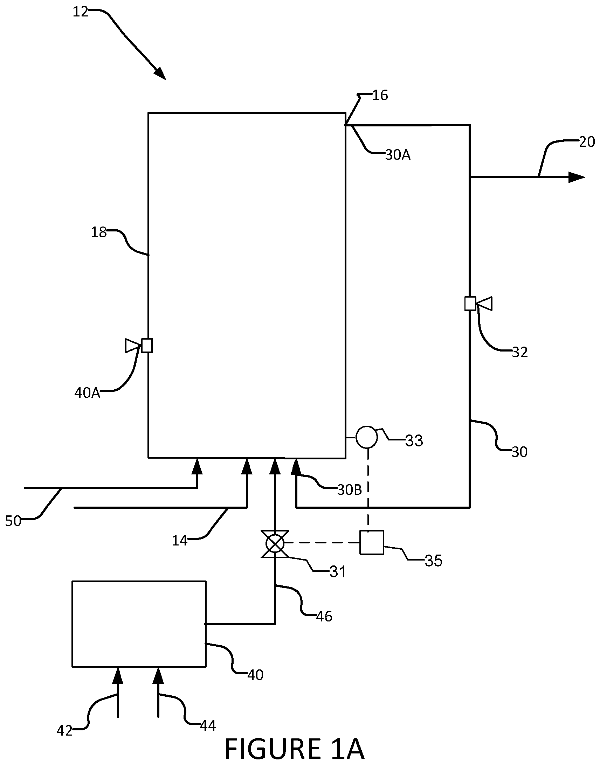

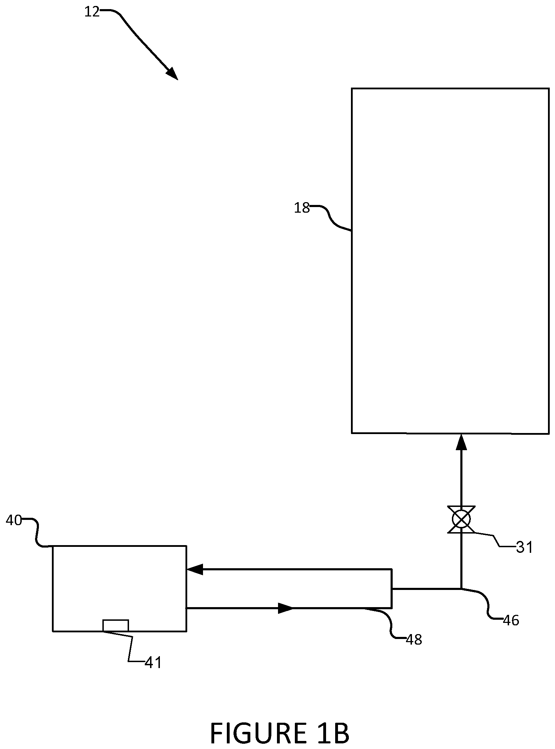

In some embodiments the reactor (not part of the present invention but related thereto) comprises a fluidized bed reactor. An example fluidized bed reactor 12 is shown in FIG. 1. Reactor 12 comprises an inlet 14, an outlet 16, and a reaction tank 18. An aqueous solution is introduced to reaction tank 18 via inlet 14. Inlet 14 is below outlet 16. Tank 18 is constructed so that the flow of aqueous solution in reactor 12 is generally upward. Crystals that may form in reactor 12 will be urged upwardly and against the force of gravity by fluid flow in reactor 12. The crystals may grow by sticking together and/or additional crystallization. Where the flow rate decreases with elevation in tank 18 particles made up of crystallization product will tend to become classified by size with larger particles tending to be located in lower parts of tank 18 and smaller particles tending to be higher up in tank 18.

The aqueous solution flows into reaction tank 18 through inlet 14 and flows out of reaction tank 18 through outlet 16. In some embodiments, reactor 12 comprises a plurality of inlets and/or outlets.

Inlet 14 may be located, for example, in or near the lower portion of reaction tank 18. Outlet 16 may be located, for example, in or near the upper portion of reaction tank 18. In some embodiments inlet 14 is oriented to face upwardly and a flow of solution introduced from inlet 14 into reaction tank 18 is directed upwardly.

In some embodiments, a method for making a crystalline product includes providing at least one ionic species that reacts to form the crystalline product from a material that yields the ionic species when dissolved where the material has a low solubility. The material may be provided in the form of fine particles. For example, where the product is struvite, the ionic species may be magnesium ions (Mg²⁺) and the material may be magnesium oxide (MgO) which has a low solubility in water. The MgO may be provided in the form of a slurry of fine particles.

Reactor 12 (not part of the present invention but related thereto) comprises a hydration tank 40. A low solubility source of Mg is introduced into hydration tank 40 via inlet 42. An aqueous solvent (e.g. water) is introduced into hydration tank 40 via inlet 44. The low solubility source of Mg is hydrated with the aqueous solvent for a period of time sufficient to hydrate the source of Mg to provide a hydrated slurry comprising free Mg²⁺ ions available in solution for struvite production in reaction tank 18. The hydrated slurry is delivered from hydration tank 40 into reaction tank 18 through inlet 46. Inlet 46 may be located, for example, in or near the lower portion of reaction tank 18. In some embodiments inlet 46 is directed upwardly and flow of a hydrated slurry introduced from inlet 46 into reaction tank 18 is directed upwardly.

Under the right reaction conditions, crystals (e.g., crystals of struvite or struvite analogs in some embodiments) form in reaction tank 18 through precipitation of dissolved materials in the solution (e.g., wastewater solution in some embodiments). Crystals may grow larger over time and may be sorted according to size by differences in fluid velocities in different regions within the reaction tank. For example, in some embodiments fluid flows upward in the reaction tank with a velocity that increases with depth in the reaction tank (decreases with elevation). This may be achieved, for example, by providing a reaction tank having a cross sectional area that increases with elevation above the inlet and/or by providing recycling paths (described elsewhere herein) having outlets at different depths in reaction tank 18.

In such embodiments particles made up of crystals may move downward as they grow in size (e.g., through accretion and/or aggregation with other crystals). The particles may ultimately enter a harvesting zone in reaction tank 18 from which they may be removed for use as fertilizer or other applications.

In some embodiments, reaction tank 18 comprises a substantially vertically-oriented conduit having a harvesting section and two or more vertically-sequential sections above the harvesting section. A cross-sectional area of the conduit may increase moving from the bottom of reaction tank 18 toward the top of reaction tank 18. For example, the cross sectional area may increase between adjacent ones of the sections. The number of sections in the conduit may be varied. In some embodiments the cross-sectional area increases stepwise. In some embodiments the cross-sectional area increases smoothly. In some embodiments, reaction tank 18 is cone-shaped or horn-shaped or otherwise configured to have a cross-sectional area that increases smoothly with elevation above the bottom of reaction tank 18. Tank 18 may be round in cross-section but is not necessarily so. Inlet 14 may be located in or below the harvesting section for example.

Some aspects may comprise a fluidized bed reactor (not part of the present invention but related thereto) of the type described in Britton, WO publication No. 2012/119260, entitled "Reactor for Precipitating Solutes from Wastewater and Associated Methods" and/or of the type described in Britton, et al., WO publication No. 2015/003265, entitled "Reactor Apparatus and Methods for Fines Control" and/or of the type described in Koch et al., US patent No. 7622047, entitled "Fluidized Bed Wastewater Treatment",

The inventors have determined that, in some applications, it is desirable to be able to maintain control of the size of the product crystals (e.g., crystals of struvite or struvite analogs) which form in the reactor through precipitation of dissolved materials. For example, it may be desirable to selectively precipitate and harvest relatively large product crystals and/or pellets (e.g., crystals and/or pellets with a diameter ≥1 mm), where product crystals aggregate together to form product pellets.

One aspect of the invention relates to methods which provide for the control of fines (fines are very small crystals, for example crystals with a diameter ≤100 µm may be described as "fines") in a reactor. Many fines in a reactor may have sizes in the range of about 1 µm to about 10 µm.

Fines can have an extremely large ratio of surface area to mass as compared to larger crystals. Where a large number of fines are present in a crystallization reactor, a high proportion of crystal growth can occur on the surface of fines thereby reducing the growth rates of larger crystals. The inventors have realized that fines production in a reactor can result from zones of high supersaturation (exceeding metastable limits and resulting in primary or secondary nucleation) or from accretion of previously formed crystals within the reactor. One could reduce production of fines by operating a reactor with very low supersaturation. However crystals may grow slowly under such conditions. It is desirable to be able to control the accumulation of fines within the reactor, especially when large (e.g., ≥1 mm) product crystal sizes are desired.

The inventors have realized that a reactor may be operated under increasing loading conditions by increasing the concentrations of one or more of the constituents of the product struvite, struvite analog, or other phosphorus-containing compound. For example, increasing the concentration of free Mg²⁺ ions may enhance crystal growth.

During struvite crystallizer operation, and especially when operating with feedstock solutions with high concentration of phosphate (>100 mg/L PO₄-P feedstocks and particularly >2,000 mg/L PO₄-P), and/or extended hydraulic retention times (>1 hrs and particularly >12 hrs) in a fluidized bed reactor (such as reactor 12) it has been found that fines (crystals with a diameter <100 µm) tend to accumulate in the reactor. In some cases, within a period of 6 to 12 hours of operation almost all the crystal formation/growth may occur as fines, either through primary/secondary nucleation, or due to growth occurring primarily on the surface of existing fines retained in the reactor. It is believed that this phenomenon can occur as a result of a combination of increased secondary nucleation in the presence of high levels of fines combined with the overwhelming majority of the crystal surface area in the reactor being on the surface of fines (which have much higher surface area to volume ratios than larger and more desirable crystals with diameters of e.g. 1-5 mm).

The rate at which fines accumulate may be controlled to a certain extent (and the period before which runaway fines production begins could be extended) by reducing the crystallization reaction rate and/or supersaturation ratio and/or loading and/or concentration of magnesium added to the reactor. However, if significant amounts of fines (e.g., >5 mg/L settled fines as measured in the reactor recycling path flow, or turbidity >500 NTU) were present in the reactor, further increase in crystal size distribution or growth of large crystals may be significantly impaired by the presence of a large number of fines.

Typically, struvite crystal recovery processes use soluble sources of Mg, such as magnesium chloride (MgCl₂) and/or magnesium sulphate (MgSO₄), as a source of free Mg²⁺ for struvite production. Due to the high solubility of these Mg sources (MgCl₂ has a solubility in water of about 54 g/L), introduction of MgCl₂ and/or MgSO₄ leads almost immediately to an increased concentration of free Mg²⁺ ions which increase the supersaturation ratio in the localized area where the Mg source was introduced. Thus, zones of high supersaturation may occur in the reactor (or portions of the reactor) thereby producing fines, as described elsewhere herein. For example, when the source of Mg is MgCl₂, a portion (e.g. about 10-50%) of the produced struvite crystals may be present as fine particles (i.e. <20 µm in diameter). Such fines are too small to effectively settle and be retained in the reactor, and therefore wash out of the reactor and are lost with the treated effluent (i.e. fines loss).

The inventors have empirically determined that when a source of Mg that has a lower solubility than conventional soluble sources of magnesium (e.g. MgCl₂ and/or MgSO₄) is used, fines production is eliminated or reduced, even under enhanced loading. Accordingly, one aspect of the invention provides methods which comprise injecting a low solubility source of Mg into the reactor for struvite crystal recovery.

In some embodiments the methods comprise a step of hydrating a low solubility source of Mg before injecting the resulting hydrated slurry into the reactor (or portion of the reactor). Thus free Mg²⁺ ions are available to react to form struvite in the reactor. For example, the methods may operate by forming an aqueous slurry of a source which releases Mg²⁺ ions as it dissolves. The source of Mg can be mixed with an aqueous solvent for a period of time (i.e. the hydration time).

In some embodiments, the hydrated slurry is circulated from a slurry tank around a loop and back to the slurry tank. A fluid velocity in the loop may be kept high enough to avoid settling of particles from the slurry in the loop. The loop may be arranged to pass close to the reactor. Injecting the hydrated slurry into the reactor may comprise diverting some of the hydrated slurry flowing in the loop into the reactor, for example by way of a valve.

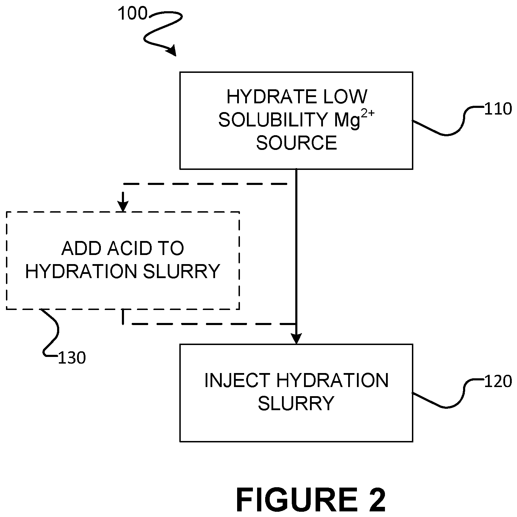

FIG. 2 is a flowchart of a method 100 according to an example embodiment of the invention. Method 100 comprises step 110 of hydrating a low solubility Mg source in an aqueous solvent, and step 120 of injecting the resulting hydrated slurry into a reactor (or a portion of the reactor) to precipitate dissolved materials (including phosphorus (PO₄-P)) from an aqueous solution to form crystals.

In some embodiments the source of Mg is magnesium oxide (MgO). As shown by the reaction below, on hydration MgO forms a MgOH⁺ complex on the surface of the MgO particle and ultimately results in the formation of 2 mol of OH⁻_{(aq)}:

MgO_{(surface)} + H⁺_{(aq)} → MgOH⁺_{(surface)} + OH⁻_{(aq)} → MgOH⁺•OH⁻_{(surface)} →

Mg²⁺_{(aq)} + 2OH⁻_{(aq)} ↔ Mg(OH)₂₍ₛ₎

The formation of 2OH⁻_{(aq)} increases and/or maintains the pH of the solution in the reactor to a level suitable for crystal formation and growth and, in some embodiments, reduces and/or eliminates the overall consumption of caustic for crystal precipitation in the reactor. In some embodiments the use of a low solubility source of Mg, such as MgO or Mg(OH₂), may replace the need for caustic (e.g. NaOH), thereby reducing or eliminating pH/supersaturation spikes at a caustic injection site in the reactor (or portion of the reactor). This may reduce overall capital and/or operating costs by eliminating or reducing the need for a separate pH control reagent and the need for the associated storage and dosing systems. Further, by eliminating or reducing pH/supersaturation spikes, fines production may be reduced or eliminated. In some embodiments the hydrated slurry buffers at alkaline pH. For example, the inventors have empirically determined that a hydrated slurry formed by hydrating MgO in an aqueous solvent buffers at a pH of about 8.1.

Suitable low solubility sources of Mg may include: MgO, Mg(OH)₂, magnesium carbonates (such as the anhydrous salt magnesite (MgCO₃), the di-, tri-, and pentahydrates barringtonite (MgCO₃•2H₂O), nesquehonite (MgCO₃•3H₂O), and lansfordite (MgCO₃•5H₂O), respectively, artinite (MgCO₃•Mg(OH)2•3H₂O), hydromagnesite (4 MgCO₃Mg(OH)2•4H₂O), dypingite (4 MgCO₃Mg(OH)2•5H₂O), dolomitic lime, or limestone with suitable Mg content). Such sources are typically less expensive than conventionally used soluble sources of Mg (e.g. MgCl₂ and MgSO₄). In some embodiments the low solubility source of Mg has a solubility in water (at about 25°C to about 30°C) of less than about 1 g/L.

In some embodiments the low solubility source of Mg has a solubility in water (at about 25°C to about 30°C) in the range of: about 5 mg/L to about 1 g/L, about 5 mg/L to about 500 mg/L, about 5 mg/L to about 150 mg/L, about 5 mg/L to about 100 mg/L, about 5 mg/L to about 90 mg/L, about 5 mg/L to about 80 mg/L, about 5 mg/L to about 70 mg/L, about 5 mg/L to about 60 mg/L, about 5 mg/L to about 50 mg/L, about 5 mg/L to about 40 mg/L, about 5 mg/L to about 30 mg/L, about 5 mg/L to about 20 mg/L, or about 5 mg/L to about 10 mg/L. For example, MgO has a solubility in water of about 86 mg/L (at 30°C). Mg(OH)₂ has a solubility in water of about 6.4 mg/L (at 25°C). MgCO₃ has a solubility in water of about 139 mg/L (at 25°C).

Persons skilled in the art will recognize that some solubility variability is common and that the solubility of a source of Mg may differ according to the provider of that Mg source. For example, the solubility of a source of Mg may differ depending on the calcination temperature and/or the calcination time to prepare the Mg source, as described elsewhere herein.

In some embodiments the low solubility source of Mg has a concentration in the reactor of less than about 0.03 mol/L. In some embodiments the low solubility source of Mg has a concentration in the reactor in the range of: about 0.1 mmol/L to about 0.03 mol/L, about 0.1 mmol/L to about 0.02 mol/L, about 0.1 mmol/L to about 4 mmol/L, about 0.1 mmol/L to about 2.5 mmol/L, about 0.1 mmol/L to about 2.2 mmol/L, about 0.1 mmol/L to about 2.0 mmol/L, about 0.1 mmol/L to about 1.7 mmol/L, about 0.1 mmol/L to about 1.5 mmol/L, about 0.1 mmol/L to about 1.2 mmol/L, about 0.1 mmol/L to about 1.0 mmol/L, about 0.1 mmol/L to about 0.7 mmol/L, about 0.1 mmol/L to about 0.5 mmol/L, or about 0.1 mmol/L to about 0.25 mmol/L. For example, when the low solubility source of Mg is MgO, the concentration of Mg in the reactor may be about 2.1 mmol/L or less.

When the low solubility source of Mg is Mg(OH)₂, the concentration of Mg in the reactor may be about 0.1 mmol/L or less. When the low solubility source of Mg is MgCO₃, the concentration of Mg in the reactor may be about 1.6 mmol/L or less.

In some embodiments the extent of hydration of the low solubility Mg source correlates with phosphorus removal (e.g. struvite crystal production). The extent of hydration may be controlled by one or more of: the duration of hydration time, heating the Mg source and aqueous solvent mixture, and the hydrated slurry concentration. For example, where the Mg source is MgO, hydration time may be controlled to prevent or minimize the formation of solid Mg(OH)₂. Mg(OH)₂₍ₛ₎ may accumulate on the surface of MgO particles, thereby decreasing the rate of free Mg²⁺ release and reducing crystal formation in the reactor.

Since Mg(OH)₂₍ₛ₎ is less soluble than MgO_{(S)}, the period of time to re-dissolve Mg(OH)₂₍ₛ₎ in an aqueous solvent to provide free/dissolved Mg²⁺ for crystal formation is longer. In some embodiments the hydration time for a low solubility source of Mg is controlled to improve crystal production. For example, the inventors have empirically demonstrated that hydrating MgO in an aqueous solvent for about 20 hours resulted in about a 4-8% better yield of struvite than a hydration time of about 15 minutes or about 36 hours. In some embodiments the desired hydration time for MgO is between about 15 minutes and about 36 hours.

In some embodiments the hydration time for MgO is between about 15 minutes and 1 hour. In some embodiments the hydration time for MgO is between about 15 minutes and several hours (e.g. 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours).

Persons skilled in the art will understand that hydration time may be influenced by reaction conditions and/or the source of Mg. For example, temperature and/or pressure and/or the presence of other solutes in an aqueous solvent may impact free Mg²⁺ release and/or Mg(OH)₂₍ₛ₎ formation when the low solubility source of Mg is MgO. For example, an aqueous slurry of MgO warms up as hydration proceeds, especially when acid is added to the slurry. This warming may impact hydration time. Thus, the hydration time for MgO may be greater than 36 hours or less than 15 minutes.

In some embodiments when the low solubility source of Mg is a substance other than MgO, the desired hydration time is greater than 15 minutes. In some embodiments the hydration time is between about 15 minutes and several hours (e.g. 15 minutes to 20 hours). Some non-limiting example hydration times are 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22 hours, 23 hours, 24 hours, 25 hours, 26 hours, 27 hours, 28 hours, 29 hours, 30 hours, 31 hours, 32 hours, 33 hours, 34 hours, 35 hours, 36 hours.

To prepare the hydrated slurry, an aqueous solvent (e.g. water) is added to the low solubility source of Mg. In some embodiments the hydrated slurry contains about 5% to about 30% Mg by weight. In some embodiments the hydrated slurry contains less than about 10% Mg by weight. Since MgO absorbs water on hydration, the hydrated slurry can become "chunky" if too little aqueous solvent is used. Accordingly, a hydrated slurry of MgO having about 25% to about 30% Mg by weight may be too dry and/or viscous and/or thick to readily mix and pump to the reactor (or portion of the reactor). In some embodiments, the amount of soluble Mg in the hydrated slurry is less than about 5 mg/L. In some embodiments, the amount of soluble Mg in the hydrated slurry is about 0.5 mg/L.

If the weight percent of Mg in the hydrated slurry is too low, this may reduce crystal production and/or increase production times and/or consume excess water thereby increasing production costs. In some embodiments the hydrated slurry is more effective when the slurry is relatively dilute (e.g. the slurry contains less than about 10% Mg by weight). For example, crystal production may be increased when the hydrated slurry of Mg(OH)₂ is dilute (e.g. contains less than about 5% Mg by weight).

In some embodiments Mg(OH)₂ is used as the low solubility source of Mg and is in the form of a slurry. Since the Mg(OH)₂ form is already hydrated, further hydration time is not needed. Since Mg(OH)₂ is less soluble than MgO, using Mg(OH)₂ as a source of magnesium may require more dilute slurries to achieve equivalent performance to slurries of MgO. Accordingly, Mg(OH)₂ may be a less effective source of Mg than MgO in terms of struvite recovery and/or loading.

Magnesium carbonates may be used as a source of Mg. However, hydrating magnesium carbonates may result in the production of carbon dioxide (CO₂) gas which could cause foaming problems and/or affect slurry pH. CO₂ gas is acidic and, accordingly, a caustic agent may be required to neutralize excess acid. Dolomitic lime or limestone may be used as the source of Mg. However, such Mg sources contain calcium (Ca), which may interfere with struvite production and/or may contaminate the resulting product with Ca. Such products may more readily precipitate from wastewater, but may be less desirable as a fertilizer than struvite. However, since MgO, Mg(OH)₂, magnesium carbonates, lime, and limestone are a relatively inexpensive, they may be an attractive low solubility source of Mg for producing struvite.

In some embodiments the particle size of the low solubility Mg source is controlled to prevent or minimize the hydrated slurry from plugging orifices or pipes of the reactor, such as manifold orifices or the like. If the particle size exceeds a desired size, the hydrated slurry can plug pipes to the point that flow is impeded and/or causes damage to pumping equipment. In some embodiments the particle size of the low solubility source of Mg is in the range of: about 100 to about 400 mesh, about 100 to about 350 mesh, about 100 to about 300 mesh, about 100 to about 250 mesh, about 100 to about 200 mesh, about 150 to about 200 mesh, about 200 to about 400 mesh, about 250 to about 400 mesh, about 300 to about 400 mesh or about 350 to about 400 mesh. In some embodiments MgO has a particle size of about 200 mesh. In some embodiments, MgO has a particle size of about 400 mesh. In some embodiments, the low solubility source of Mg is a fine powder having a particle size in a range of about 10 to about 50 µm, about 10 to about 40 µm, or about 12 to about 30 µm. In some embodiments, MgO has a particle size in a range of about 0.17 mm (17 SGN) to about 1 mm (100 SGN) (size guide number). In some embodiments, MgO has a particle size in a range of about 17 SGN to about 30 SGN.

Persons skilled in the art will recognize that the mesh grade of the low solubility Mg source may be affected by the calcination temperature and/or the calcination time to prepare the Mg source. For example, MgO may be prepared by calcinating magnesium carbonate. In some embodiments the calcination temperature is less than about 1,200°C. In some embodiments the calcination temperature is in the range of about 600°C to about 1,200°C. In some embodiments the calcination time is less than about 3 hours. In some embodiments the calcination time is in the range of about 1 to 3 hours. In some embodiments the calcination time is about 2 hours.

By optimizing the conditions for preparing the low solubility Mg source, the particle size, specific surface area and reactivity may be controlled. For example, in some embodiments a particle size of about 200 mesh is desirable. Such particles may be optimally retained by the reactor without clogging the system used to deliver the low solubility Mg source to the reactor and/or without the need for high-flow pumps.

Without being bound to any particular theory, the inventors believe that employing a low solubility source of Mg may avoid or reduce fines production due to the longer retention time of the slow dissolving low solubility sources of Mg as compared to conventional soluble Mg sources (e.g. MgCl₂ and/or MgSO₄). The low solubility sources of Mg slowly release free Mg²⁺ ions into solution such that the distribution of Mg²⁺ ions throughout the reactor (or portion of the reactor) is substantially uniform. In this way, crystallization is promoted throughout the reactor (or portion of the reactor) and localized areas where Mg concentration is significantly elevated may be minimized or avoided. Thus, the slow rate of dissolution of low solubility Mg sources may prevent or minimize areas where the supersaturation ratio is sufficiently high to cause a large number of fines to be produced.

Another theory is that the presence of a low solubility Mg source assists any fines that are produced in the reactor (or a portion of the reactor) to stick together or to other particles present in solution. The inventors have tested effluent treated by adding a low solubility source of Mg to aqueous solution in a fluidized bed reactor at loading rates between 5 and 250 g PO₄⁻P/min/m³ and failed to observe fine particles or MgO particles in the effluent or recycle fluid. If the reduction or elimination of fines reduction was due exclusively to a longer retention time, then observation of the low solubility Mg source would be expected in the treated effluent and/or recycle fluid. Since the treated effluent and recycle fluid were empirically observed by the inventors to be free of the low solubility Mg source, it is possible that the low solubility Mg source "sticks" to the struvite crystals present in the reactor.

Thus, in some embodiments, the low solubility source of Mg (e.g., MgO) is introduced into a fluidized bed. Particles in the fluidized bed may comprise struvite, a struvite analog, or monoammonium phosphate, for example. The low solubility source of Mg may be provided in the form of particles that would be washed out of the reactor for given fluid flow rates in the reactor. Interaction between the small particles of MgO (or other low solubility source as an ionic species) may retain the small particles in the fluidized bed such that the particles supply Mg²⁺ (or another ionic species) throughout all or large parts of the fluidized bed. The distributes small particles may replenish available Mg²⁺ (or another ionic species) as the available Mg²⁺ is consumed in the production of struvite or another product.

The inventors have empirically determined that the resulting struvite crystals can be relatively pure, with little to no excess Mg observed in product samples. Therefore, the inventors believe that the low solubility source of Mg may be essentially completely dissolved and used to form struvite crystals. Further trials were carried out in which the reactor was fed with tap water essentially free of phosphate and ammonia, and a hydrated MgO slurry, resulting in the injection and dilution of the MgO slurry in the water, but no struvite formation reaction. In this case a substantial portion of the injected MgO slurry was observed in the reactor recycle and effluent. The experiment was repeated both with and without a fluidised bed of struvite particles present in the reactor, with the same results. This indicates that the occurrence of the struvite formation reaction is required to get the hydrated MgO slurry particles to adhere to the fluidised bed.

Without being bound to any particular theory, the inventors believe that formation of a slurry via hydrating a low solubility source of Mg before the source is added to the reactor (or portion of the reactor) may result in the uniform distribution of free Mg²⁺ ions throughout the reactor volume (or portion of the reactor volume), thereby enhancing loading limitations and/or increasing struvite production and/or reducing fines production. For example, the limited solubility of the low solubility Mg source may allow the localized supersaturation ratio around the point of Mg²⁺ injection to stay relatively low as compared to cases in which conventional highly soluble Mg sources (e.g. MgCl₂ and MgSO₄) are injected into a similar reactor.

Method 100 comprises a step 130 of adding an acid to the hydrated slurry. The acid can be added to the tank in which the low solubility Mg source slurry is hydrated or stored. The addition of acid may increase the yield of struvite in the treatment of high strength wastewater (e.g., wastewater which contains high amounts of fats, oils, and greases (FOG) or other organic components). It has been found that addition of approximately a 0.4:1 mol ratio of H⁺ to Mg is effective in increasing the yield of struvite. When the low solubility Mg source is MgO, the acid provides H⁺_{(aq)} to drive formation of the MgOH⁺ complex in the first step of the hydration mechanism depicted elsewhere herein.

The inventors have empirically determined that adding a suitable amount of acid to the hydrated slurry may increase the rate of struvite crystal production and/or overall struvite conversion efficiency, thereby resulting in a higher yield of struvite crystals and/or allowing increased reactor loading.

For example, adding an acid in a 0.2:1 molar equivalent ratio of H⁺:Mg increased struvite crystal yield by about 10-20%. In some embodiments an amount of acid is added to the hydrated slurry to neutralize about 20% of any hydroxide formed by hydrating the low solubility source of Mg. Suitable acids include strong acids, such as hydrochloric acid (HCl), sulphuric acid (H₂SO₄), nitric acid (HNO₃) etc., and weak acids, such as acetic acid, citric acid, oxalic acid, etc. Acids that interfere with struvite production (e.g. phosphoric acid (H₃PO₄)) and/or acids that are too weak to break up MgO particles (or other low solubility Mg source particles) are avoided in some embodiments.

In one embodiment, the acid comprises sulfuric acid. For example, the acid may be 93% - 98% sulfuric acid. Sulfuric acid is readily available at wet process phosphoric acid plants and thus is convenient to use when operating this method at or near a wet process phosphoric acid plant. Sulfuric acid is generally one of the more cost effective commercially available acids.

In another embodiment, the acid comprises acetic acid (or other volatile fatty acid or blend of volatile fatty acids), which is useful as a source of volatile fatty acids required for the uptake of phosphate from wastewater in treatment plants using enhanced biological phosphorus removal. Therefore, applying acetic acid or volatile fatty acids to the wastewater in the recycling path creates an additional level of synergy.

In some embodiments, in step 120, the acid is dosed to the hydrated slurry. For example, the acid may be added in liquid form to a slurry hydration tank. Weak acids, such as citric acid, that are available in dry form could be added as a powder to the hydration tank, or pre-mixed with MgO prior to hydration.

In some embodiments, in step 110 and/or step 120, the pH of the hydrated slurry is controlled by adding an appropriate amount of acid.

Reactor design and/or reaction conditions may impact fines and/or struvite production and/or operation economies when the source of Mg is a low solubility source. For example, in some embodiments the hydrated slurry is injected close to the bottom of the reactor (or portion of the reactor), as described elsewhere herein.

Since hydrated slurries, such as hydrated slurries of MgO, can be prone to scaling and plugging, a recycling path may be used to adjust fluid flow rates within the hydrated slurry mixing and pumping system. The relatively high fluid velocity in the recycling path may prevent or minimize scaling and plugging by the low solubility Mg source.

In the embodiment illustrated in FIG. 1A (not part of the present invention but related thereto), reactor 12 comprises a recycling path 30. Not all fluidized bed reactors have a recycling path. However, a recycling path 30 can be advantageous as it provides a way to adjust fluid flow rates within reactor 12 without changing the rate at which aqueous solution is introduced into reaction tank 18 at inlet 14. Recycling path 30 is connected to receive or withdraw solution from reaction tank 18 and to return solution to reaction tank 18. Reactors according to some embodiments (not part of the present invention but related thereto) may provide a plurality of recycling paths 30.

The illustrated recycling path 30 has an inlet end 30A and an outlet end 30B. In the FIG. 1 embodiment (not part of the present invention but related thereto), outlet 16 connects to inlet end 30A of recycling path 30, although in other embodiments, inlet end 30A of recycling path 30 can be separate from outlet 16. Outlet 16 may connect to an effluent piping system 20. Inlet 14, outlet 16, recycling path 30, and effluent piping system 20 each comprise one or more valves which allow them to be turned on or off.

Recycling path 30 is connected to withdraw solution from reaction tank 18 and to return solution to reaction tank 18. In some embodiments, recycling path 30 returns solution to reaction tank 18 below a location at which the solution is received from reaction tank 18. In some embodiments, recycling path 30 shares inlet 14 and/or outlet 16 (e.g., inlet end 30A of recycling path 30 is in direct fluid communication with outlet 16, and/or outlet end 30B of recycling path 30 is in direct fluid communication with inlet 14). In other embodiments, recycling path 30 has one or more inlet ends separate from outlet 16 and/or one or more outlet ends into reaction tank 18 separate from inlet 14.

Where solubility of a substance being precipitated is pH-dependent, reactor 12 may comprise an acid injector 32 to apply an acid to the solution flow. Acid may be injected for example into recycling path 30. Injection of acid lowers the pH of the solution in recycling path 30 or in reactor 12 as a whole. A recycling path 30 with an acid injector 32 may act as a fines destruct loop, selectively dissolving fines that are small enough to be held in suspension in the reactor recycling path flow. Most of the larger crystals remain in reaction tank 18 (e.g., in the fluidized bed in the reaction tank).

In some embodiments, the acid applied in recycling path 30 may lower the pH not only in recycling path 30, but also in reaction tank 18. It is possible that the reduction of pH locally in recycling path 30 may be greater than the reduction of pH in reaction tank 18 which is further away from acid injector 32. Because the fines have a high surface area to volume ratio relative to the larger crystals, the fines have a tendency to dissolve faster on a % mass basis than the larger crystals. In some embodiments, pH is increased in the recycling path (e.g. by neutralizing the acid by injecting a base) before the recycling path rejoins tank 18.

In some embodiments, reaction tank 18 may comprise a base injector which injects a base (e.g., a substance which increases the concentration of OH⁻ ions in the solution and/or increases the pH of the solution) into the solution in reaction tank 18 to increase or maintain the pH of the solution. An example base injector 40A is schematically illustrated in FIG. 1A (not part of the present invention but related thereto). Base injector 40A may be connected to a controller and a measuring device (e.g., a pH probe).

In some embodiments, the pH of the solution in reaction tank 18 is maintained at a relatively high pH (as compared to some prior struvite precipitation processes - e.g., a pH ≥ 7 or ≥ 7.5)). In some cases pH of 8 or 9 or more is maintained in all or part of the reaction tank. The inventors have determined that maintaining certain struvite formation reactions at a higher pH may help to drive the equilibrium reaction to completion. This in turn improves the efficiency of phosphate removal. Specifically, the inventors have found that increasing the pH of the reaction using MgO as the source of Mg in the struvite formation reaction can achieve nearly a complete removal (98%) efficiency of phosphate from a given wastewater sample. Typical efficiency of phosphate removal using conventional struvite formation reactions is significantly lower.

The rate of addition of the hydrated slurry into reaction tank 18 can impact the efficiency of phosphate removal. The inventors have found that the pH of the solution in reaction tank 18 may be used as an indicator of the amount of the hydrated slurry (or specifically the concentration of the low solubility Mg source) present in the solution in the reactor at a given time. In some embodiments, the pH is maintained by adjusting the flow of the hydrated slurry into reaction tank 18 (or conversely, injection of the hydrated slurry into reaction tank is controlled based on pH in reaction tank 18). It is also possible to control addition of the hydrated slurry to maintain a desired molar ratio of Mg:P in the reactor.

In some embodiments, the pH of the solution in reaction tank 18 is controlled by the addition of the hydrated slurry. In some embodiments, reactor 12 comprises a control valve 31 between reactor tank 18 and hydration tank 40. Control valve 31 controls the flow of the hydrated slurry out of hydration tank 40 and into reaction tank 18. In some embodiments, control valve 31 is connected to a controller 35. Controller 35 may receive input from a pH probe 33. pH probe 33 measures the pH of the solution in reaction tank 18. Controller 35 may control the opening and closing of control valve 31 in response to the pH of the solution in reaction tank 18. In some embodiments, pH probe 33 transmits real-time pH measurements of the solution in reaction tank 18 to controller 35. Control valve 31 may open to allow the flow of the hydrated slurry into reaction tank 18 in response to a deviation in the pH of the solution from a target pH. In some embodiments, the target pH is at a pH greater than one that is conventionally maintained in struvite precipitation processes. In such embodiments, control valve 31 may open to allow the flow of the hydrated slurry into reaction tank 18 in response to a decrease in pH of the solution from the target pH. The increase of hydrated slurry that flows through the fluidized bed of reaction tank 18 results in an increase in the pH of the solution. In some embodiments, control valve 31 may be set to open at intervals of about 30 seconds to about 5 minutes.

In an example embodiment as illustrated in FIG. 1B (not part of the present invention but related thereto), reactor 12 includes a slurry loop 48. Slurry loop 48 circulates the hydrated slurry into and out of hydration tank 40. Hydration tank 40 may comprise a mixer 41 for continuously mixing the hydrated slurry. Slurry loop 48 may be in fluid connection with inlet 46. This allows the hydrated slurry to flow out of slurry loop 48 and into reaction tank 18. In some embodiments, the hydrated slurry is continuously circulated out of hydration tank 40 and into reaction tank 18 through slurry loop 48. In some embodiments, the flow of the hydrated slurry from slurry loop 48 into reaction tank 18 is controlled by valve 31. The inventors have determined that circulating the hydrated slurry within a slurry loop maintains the flow of the hydrated slurry within the reactor at a desired velocity which prevents the settling of Mg source particles.

In some embodiments, a soluble Mg source (e,g., MgCl₂) may be injected into reaction tank 18 in addition to introducing the hydrated slurry containing a low solubility Mg source. The soluble Mg source may optionally be injected into reaction tank 18 concurrently with the hydrated slurry. The soluble Mg source may be injected into reaction tank 18 via the same inlet as or a different inlet from the injection of the low solubility Mg source.

Reaction time may impact struvite production and/or fines and/or operation economies when the source of Mg is a low solubility source. Due at least in part to the limited solubility of a low solubility Mg source, reaction times to achieve desired phosphorus removal are generally longer than those observed for conventional soluble Mg sources (e.g. MgCl₂ and MgSO₄). The low solubility of the low solubility Mg source allows the Mg source to slowly release free Mg²⁺ ions over time. For example, reaction times of about 6 minutes are typical for soluble Mg sources. For low solubility Mg sources, reaction times of about 30 to about 60 minutes may be required to achieve desired phosphorus removal.

Reaction time may be controlled by decreasing the flow rate of aqueous solution into the reactor. By increasing the reaction time, the low solubility Mg source may be able to uniformly distribute throughout the reactor volume (or portion of the reactor volume). This may allow the localized supersaturation ratio around the point of hydrated slurry injection to stay relatively low as compared to conventional soluble Mg sources (e.g. MgCl₂ and MgSO₄), while maintaining a relatively high supersaturation throughout a substantial portion of the reactor (or portion of the reactor) as the low solubility Mg source particles continue to dissolve thereby replenishing the free Mg²⁺ concentration throughout the fluidized bed.

Loading may impact struvite production and/or fines formation and/or operation economies when the source of Mg is a low solubility source. For example, a fluidized bed type reactor may be operated under high growth conditions (i.e. high loading conditions) when a low solubility source of Mg is added to an aqueous solution in the reactor (or portion of the reactor). In some embodiments loading is above a threshold to achieve a high growth rate of crystals. For example, the inventors have empirically observed that loading may 5 g PO₄-P/min/m³ or more or 50 g PO₄-P/min/m³ or more or 100 g PO₄-P/min/m³ or more or 250 g PO₄-P/min/m³ or more in a reactor (or a portion of the reactor). In some instances the loading of PO₄-P may be increased by a multiple of 2, 5, 7, 10, 17, 20, 25 or more while producing commercially acceptable particles of struvite by switching from injecting a high solubility source of Mg to injecting a lower solubility source of Mg as described herein (e.g. when a 10% by weight aqueous slurry of MgO is used) in comparison, to a similar case where conventional soluble Mg sources (i.e. MgCl₂ or MgSO₄) are used (typically as 1% to 32% solutions of MgCl₂ or MgSO₄). Accordingly, loading may be increased very significantly, for example by a multiple of 5 or more or 10 or more or 25 or times by employing a low solubility Mg source as described herein as compared to a case where a highly soluble Mg source is used.

In some embodiments an aqueous solution having a relatively high concentration of phosphorus (i.e. about 2,000 to about 10,000 mg/L PO₄-P) may be fed to the reactor at a relatively low flowrate to maintain reactor loading. In some embodiments an aqueous solution having a lower concentration of phosphorus (i.e. about 40 to about 600 mg/L PO₄-P) may be fed to the reactor. In some embodiments the reactor (or a portion of the reactor) has a hydraulic limitation (i.e. a maximum upflow velocity and/or a minimum hydraulic retention time (HRT)) which may limit maximum loading. For example, in some embodiments, reaction tank 18 of reactor 12 comprises a substantially vertically-oriented conduit having a harvesting section and two or more vertically-sequential sections above the harvesting section. In such embodiments the reactor may be operated at an upflow velocity of about 250 cm/minute in a harvest section of the reaction tank and 60 cm/minute in one or more of the vertically-sequential sections above the harvesting section. In some embodiments, fines may be separated from the solution in a recycling path and concentrated through settling, filtration, centrifugation, or other solids separation techniques, and the concentrated fines solids sent to a fines treatment tank where they are dissolved in a reduced pH solution (e.g. an acidic solution) before being returned to the reaction tank and/or to the recycle path. The fines treatment tank may be operated at an upflow velocity of about 7 cm/minute. The fines treatment tank may be used to capture fines and/or low solubility Mg source particles and return the low solubility Mg source to the reaction tank and/or the recycle path to be dissolved for crystal production. Where the low solubility source of Mg particles settle fast enough to be retained in the reactor, or are otherwise agglomerated into growing struvite particles, then the low solubility source of Mg may be retained for a period of time that is longer than the HRT of aqueous solution flowing through the reactor, possibly eliminating or reducing HRT as a limiting factor on reactor loading and leaving the upflow velocity as a limit.

### Example 1 - Phosphorus Removal with Various Sources of Mg

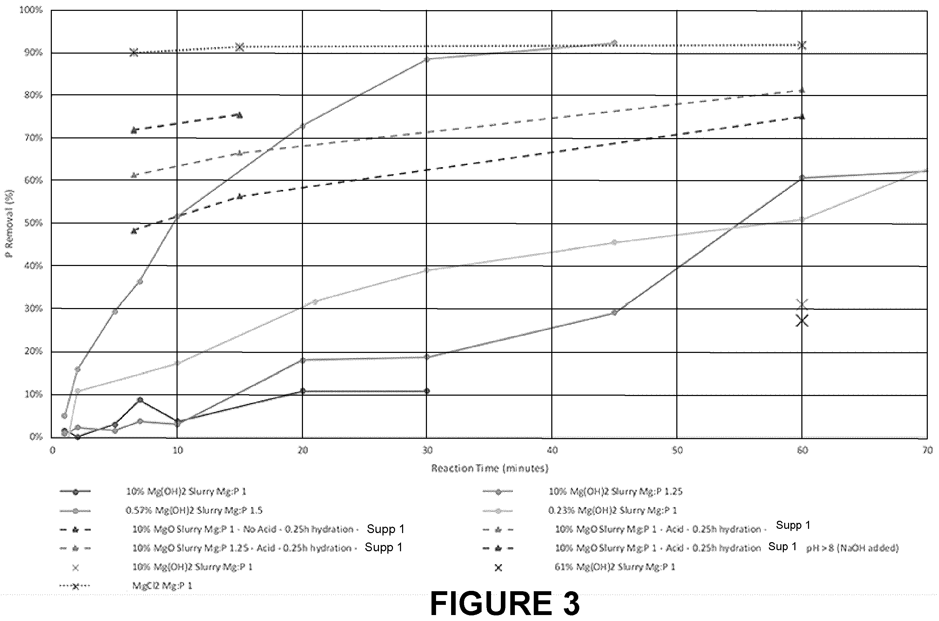

Samples of aqueous solution (dewatering liquors from municipal wastewater treatment plant anaerobic digesters) were reacted with various low solubility sources of Mg to determine the impact of low solubility Mg source type on phosphorus (P) removal (%) as a function of reaction time (minutes). The results of the tests are shown in in FIG. 3. Samples were prepared as described in Table 1.

In each case a 10% solution of MgO slurry was prepared. If acid was utilized (thus according to the invention), then 93% sulfuric acid was dosed to the MgO slurry at a 0.4: 1 mol H per mol Mg. The MgO slurry was then left to hydrate for 15 minutes, before being dosed at a 1:1 Mg:P to a jar of dewatering liquor. The jar was left to react for 60 minutes, and then the soluble concentrations in the jar were recorded to determine the removals. After 20 hours of hydration, another jar of dewatering liquor was dosed with the MgO slurry at an Mg:P ratio of 1:1, left to react for 60 minutes, and then the soluble concentrations in the jar were recorded.

**Table 1 - Phosphorus Removal with Various Sources of Mg**

| **Mg Source** | **Hydration Time** | **Mg:P (mol: mol)** | **Acid** | **Base** | **pH** |
|---|---|---|---|---|---|
| SITE 1 10% Mg(OH)₂ aqueous slurry | | 1:1 | | | |
| SITE 1 0.57% Mg(OH)₂ aqueous slurry | | 1.5:1 | | | |
| SITE 2 10% Mg(OH)₂ aqueous slurry | 0.25 h | 1:1 | | | |
| SITE 2 10% Mg(OH)₂ aqueous slurry | 0.25 h | 1.25:1 | | | |
| SITE 2 10% Mg(OH)₂ aqueous slurry | | 1:1 | | | |
| SITE 2 32 wt. % MgCl₂ | | 1:1 | | | |
| SITE 1 10% Mg(OH)₂ aqueous slurry | | 1.25:1 | | | |
| SITE 1 0.23% Mg(OH)₂ aqueous slurry | | 1:1 | | | |
| SITE 2 10% MgO aqueous slurry | 0.25 h | 1:1 | Yes 0.4:1 mol H⁺:mol Mg | | |
| SITE 2 10% MgO aqueous slurry | 0.25 h | 1:1 | Yes 0.4:1 mol H⁺:mol Mg | NaOH added | >8 |

### Example 2 - Effect of Acid and Hydration Time on Struvite Recovery

The following hydrated slurries were prepared in water: (i) 10% by weight MgO, hydration time = 20 hours (not according to the present invention but related thereto); (ii) 10% by weight MgO, hydration time = 15 minutes (not according to the present invention but related thereto); (iii) 10% by weight MgO with 0.2:1 mol H₂SO₄:MgO, hydration time = 19 hours; and (iv) 10% by weight MgO with 0.2:1 mol H₂SO₄:MgO, hydration time = 15 minutes. Each hydrated slurry was added to a sample of an aqueous (dewatering liquors from municipal wastewater treatment plant anaerobic digesters) and the solutions were mixed for 60 minutes.

The solutions were analyzed for P, N, and Mg content. At least 80% of the phosphorus (P) content of each aqueous solution was removed by the hydrated slurries as indicated in Table 3. P removal (%) was higher where the hydrated slurry contained 0.2:1 mol H₂SO₄:MgO (i.e. slurries (iii) and (iv)) and where the slurry had a longer hydration time (i.e. slurries (i) and (iii)). The Mg content analysis indicated that less Mg was available for P removal for slurries (ii) and (iv).

**Table 3 - Effect of Acid and Hydration Time on Struvite Recovery**

| **Slurry** | **Hydration time (hours)** | **H₂SO₄:MgO (mol:mol)** | **Mg:P (mol:mol)** | **P removal (%)** |
|---|---|---|---|---|
| i | 19 | 0 | 1:1 | 90 |
| ii | 0.25 | 0 | 1:1 | 84 |
| iii | 20 | 0.2:1 | 1:1 | 91 |
| iv | 0.25 | 0.2:1 | 1:1 | 87 |

### Example 3 - Effect of Acid on Free Mg²⁺ Ion Concentration

Acid was added to the MgO hydrated slurries prepared in Example 4. The final ratios were as follows: (i) 0.49:1 mol H₂SO₄:MgO (not according to the present invention but related thereto); (ii) 0:1 mol H₂SO₄:MgO (not according to the present invention but related thereto); (iii) 0.20:1 mol H₂SO₄:MgO; and (iv) 0.94:1 mol H₂SO₄:MgO (not according to the present invention but related thereto). Each hydrated slurry was added to a sample of an aqueous solution (dewatering liquors from municipal wastewater treatment plant anaerobic digesters). Additional acid was added to the samples with hydrated slurries (i) and (iv) to lower the pH below 9.

Without being bound to any particular theory, the inventors believe that additional acid was needed to lower pH because the mechanism to produce Mg(OH)₂ from MgO includes the intermediate production of Mg²⁺_{(aq)} and OH⁻_{(aq)}. The Mg²⁺_{(aq)} ions are available for crystal production and the OH⁻_{(aq)} ions remain free in solution available to form MgOH⁺•OH⁻_{(surface)} and promote the production of additional Mg²⁺_{(aq)} and OH⁻_{(aq)}, thereby causing the pH to continue to rise until Mg(OH)₂₍ₛ₎ is formed.

Without being bound to any particular theory, the inventors believe that the sample containing hydrated slurry (iii) did not require additional acid since the MgO had likely fully converted to Mg(OH)₂ and, accordingly, the pH of the solution was controlled by the dissolution of Mg(OH)₂ and precipitation of struvite. The sample containing hydrated slurry (iv) required additional acid because the hydrated slurry had likely formed an initial layer of Mg(OH)₂ and additional Mg²⁺_{(aq)} and OH⁻_{(aq)} ions were released into solution as additional MgOH⁺•OH⁻_{(surface)} was formed. The sample containing hydrated slurry (i), which is believed to have been less hydrated than the sample containing hydrated slurry (iii), required additional acid. It is likely that some unreacted MgO was hydrating during struvite production. Since hydrated slurry (ii) did not contain acid, was hydrated for a shorter duration of time (i.e. 15 minutes), and the temperature was kept at room temperature, it is believed that the water did not have sufficient time to diffuse within the MgO particles. Accordingly, the initial surface layer of Mg(OH)₂ could still have been forming and would have been available to react with the struvite. Once the struvite reaction completed, a number of unreacted MgO sites would have remained (which would explain the low final Mg concentration observed).

### Example 4 - P Removal (MgCl₂) (not according to the invention)

A 32% by weight aqueous solution of MgCl₂ was prepared and added to an aqueous solution (dewatering liquors from municipal wastewater treatment plant anaerobic digesters) such that the Mg:P ratio (mol:mol) was 1:1. The pH of the resulting solution was increased to 7.9 by adding 0.5 mL of NaOH_{(aq)} and the solution was mixed for 60 minutes. The pH rose to 8.24 during the 60 minute mixing time. P removal was 92% and the solution contained 32 mg/L Mg, 10.8 mg/L P, 621 mg/L NH₃-N.

### Example 7 - Alternate Sources of MgO

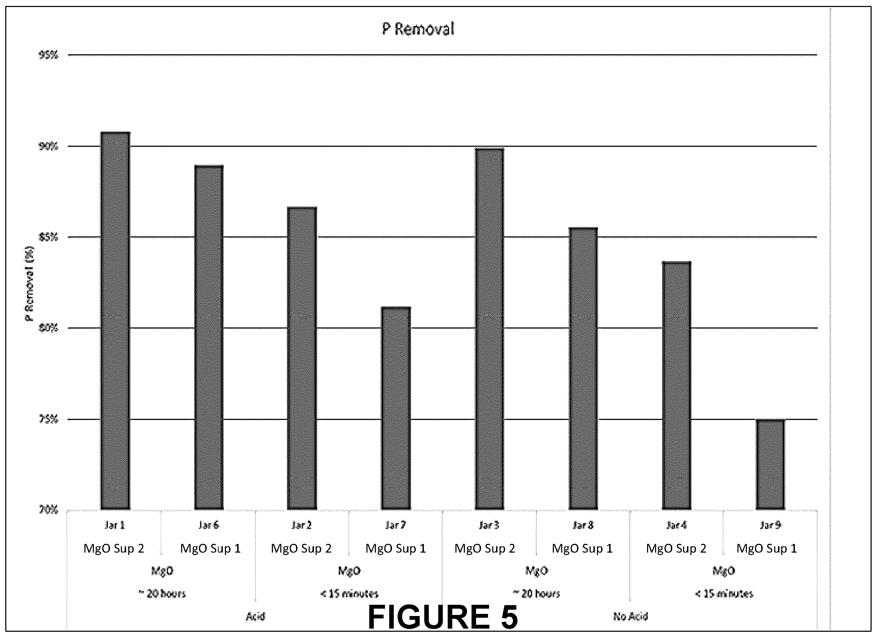

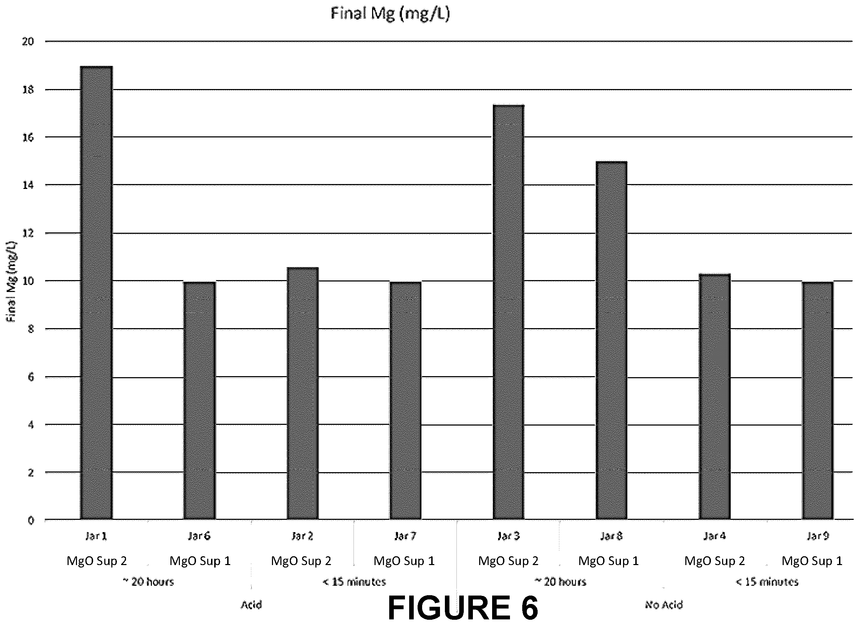

The differences in reactivity between different sources of MgO were compared. FIG. 5 shows P removal % and FIG. 6 shows final Mg concentration for various samples prepared using MgO from a first supplier (Supplier 1) and MgO from a second supplier (Supplier 2).MgO hydrated slurries of the two sources were prepared as follows:

| **MgO Source** | **Acid** | **Hydration Time** |
|---|---|---|
| Supplier 2 | Yes 0.2 mol H₂SO₄ : mg | ~20 hours |
| Supplier 1 | Yes 0.2 mol H₂SO₄ : mg | ~20 hours |
| Supplier 2 | Yes 0.2 mol H₂SO₄ : mg | <15 minutes |
| Supplier 1 | Yes 0.2 mol H₂SO₄ : mg | <15 minutes |
| Supplier 2 | 0 | ~20 hours |
| Supplier 1 | 0 | ~20 hours |
| Supplier 2 | 0 | <15 minutes |
| Supplier 1 | 0 | <15 minutes |

Each hydrated slurry was added to a sample of an aqueous solution (dewatering liquors from municipal wastewater treatment plant anaerobic digesters) and P removal (%) was determined. P removal (%) was greater for the MgO from Supplier 2 over MgO from Supplier 1. This indicates that the Supplier 2 MgO hydrated slurries were likely Mg limited and that the Supplier 1 MgO source is likely less reactive than the Supplier 2 MgO source. However, the Supplier 1 MgO source was more sensitive to hydration time and added acid. P removal % was greater where the hydration time was longer (i.e. ~20 hours vs. <15minutes). P removal % was greater where acid was added to the MgO slurry. It is worth noting that the Supplier 1 MgO slurries were all hydrated at a lower temperature than the Supplier 2 MgO slurries, since the heat of reaction of the Supplier 2 MgO and water was greater than that of the Supplier 1 MgO slurries. Also, the final pH of the Supplier 1 MgO slurry and aqueous solution mixture was about 0.1 lower than the pH of the Supplier 2 MgO slurry and aqueous solution mixture. Accordingly, secondary addition of acid was not required for the mixtures containing a Supplier 1 MgO slurry. This may imply the presence of fewer MgOH⁺ sites for reaction and/or that the Supplier 1 MgO slurry particles have a smaller surface area than the Supplier 2 MgO slurry particles. Since overshooting pH appears to be less of a concern using a Supplier 1 MgO slurry, the Supplier 1 MgO may be preferable for use in struvite recovery.

### Example 5 - Effect of Hydration Time

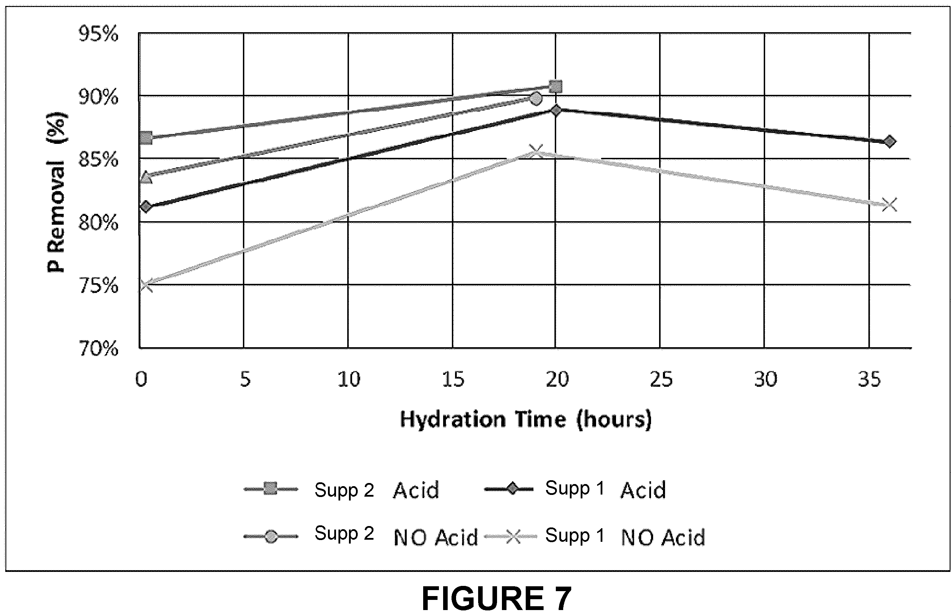

Aqueous slurries of Supplier 2 MgO and Supplier 1 MgO were prepared and afforded various hydration. An aqueous MgO slurry that was hydrated for 48 hours appeared dried out, indicating that the MgO had likely entirely converted to Mg(OH)₂₍ₛ). Aqueous slurries of Supplier 2 MgO and Supplier 1 MgO were prepared having the following hydration times: 15 minutes, about 20 hours, and 36 hours. Each slurry was added to a sample of an aqueous solution containing P (dewatering liquors from municipal wastewater treatment plant anaerobic digesters) and P removal (%) was compared. The results are shown in FIG. 7. The MgO slurries that hydrated for 36 hours were less effective for removing P than the MgO slurries that hydrated for 20 hours. The MgO slurries that hydrated for 15 minutes were least effective for P removal. The MgO slurries prepared with acid effected greater P removal than the MgO slurries prepared without acid.

### Example 6 - Effect of Temperature

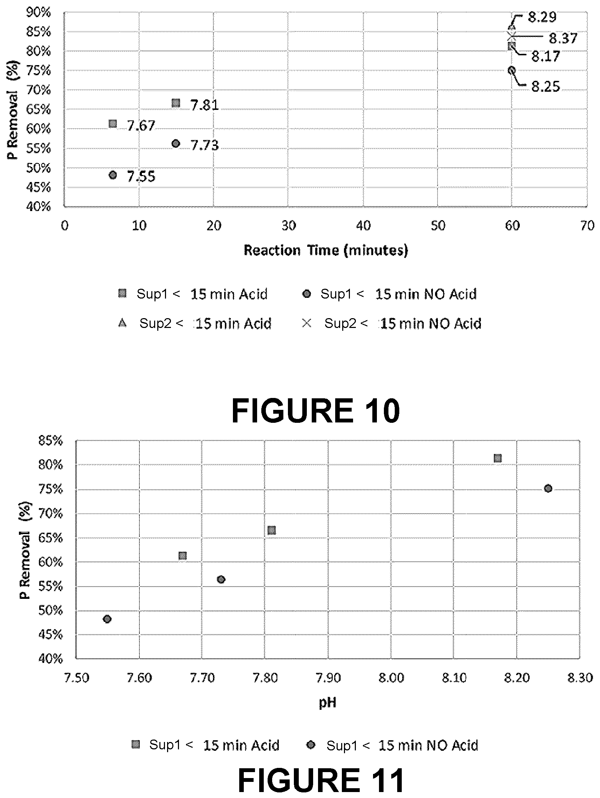

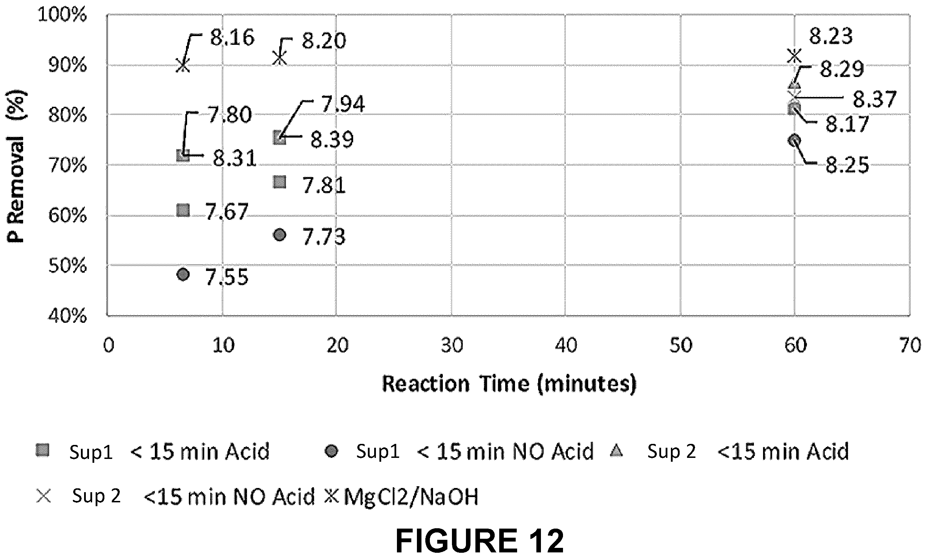

The effect of temperature on hydration was tested by heating aqueous MgO slurries prepared from Supplier 2 MgO and Supplier 1 MgO in the presence and absence of acid. Hydration time was 15 minutes. As shown in FIGS. 11 and 12, increasing temperature from room temperature to over 55°C had little effect on P removal (%) (i.e. Jars 4, 13, 9, and 15). Adding acid improved P removal (%) at room temperature (i.e. Jars 2 and 7).

### Example 7 - Effect of Retention Time

The effect of reaction time on P removal (%) was tested for Supplier 2 MgO and Supplier 1 MgO aqueous slurries prepared with and without acid (10% MgO slurries with and without 0.2:1 H₂SO₄:MgO molar dose). A fluidized bed reactor of the type described in Britton, WO publication No. 2012/119260, entitled "Reactor for Precipitating Solutes from Wastewater and Associated Methods" was used. The reactor had a volume of approximately 168 m³ to the bottom of the recycle manifold. As shown in FIG. 10, P removal (%) was determined after reaction times of 6.5 minutes (which is the HRT of the reactor) 15 minutes, and 60 minutes. FIG. 11 shows the pH of each aqueous solution. P removal (%) was higher for the 15 minute sample than the 6.5 minute sample, which may be related to the observed pH increase of 0.2 after the longer reaction time.

NaOH was added to increase the pH of each mixture above 8 and P removal (%) was determined after reaction times of 6.5 minutes, 15 minutes, and 60 minutes. The Mg:P (mol:mol) ratio was 1.25:1 for each sample. P removal (%) was also determined for a MgCl₂ sample with added NaOH to increase pH above 8. The results are shown in FIG. 12.

MgO slurries showed increasing P removal performance with increased reaction time, and with acid addition; approaching the performance of soluble Mg sources (MgCl₂) and caustic at 60 minutes of reaction time.

### Example 8 - Full Scale Demonstrations (not according to the invention)

Full scale commercial fluidized bed reactors were used to test the use of a low solubility Mg source, specifically MgO, in the precipitation of wastewater. Two full scale demonstration experiments were performed. Different sources of MgO were used in the two experiments. In the first experiment, the source of MgO was a fine powder of calcinated magnesite with a particle size distribution where about 90% of the particles are smaller than 75 µm. A target MgO concentration of about 12% by weight of MgO was maintained in the reaction tank. The loading was about 65 kg of PO₄-P per day. The pH of the solution in the reaction tank was in the range of from about 7.5 to about 8.1. The flow of the MgO hydrated slurry into the reaction tank was controlled by maintaining a molar Mg:P ratio in the reaction tank. Samples from the reaction tank were collected and analyzed to determine the amount of solids produced from the reaction and the amount of dissolved Mg remained in the supernatant of the sample. The percent of total solids and the amount of dissolved Mg detected in the collected samples were 18.75% and 0.566 mg/L respectively.

In the second experiment, the source of MgO was a fine powder of calcinated magnesite with a particle size of about 200 mesh (with about 96% pass through). A target MgO concentration of about 20% by weight of MgO was maintained in the reaction tank. The loading was about 195 kg of PO₄-P per day. The flow of the MgO hydrated slurry into the reaction tank was controlled by maintaining the pH at about 7.9 to about 8. Samples from the reaction tank were collected and analyzed to determine the amount of solids produced from the reaction and the amount of dissolved Mg remained in the supernatant of the sample. The percent of total solids and the amount of dissolved Mg detected in the collected samples were 30.21% and 1.36 mg/L respectively.

The results from these experiments illustrate that low amounts of free Mg are present when the reaction is complete. This suggests that the majority of the Mg that was added to the reaction tank was used to form struvite.

While a number of exemplary aspects and embodiments have been discussed above, those of skill in the art will recognize certain modifications, permutations, additions and sub-combinations thereof. It is therefore intended that the following appended claims and claims hereafter introduced are interpreted to include all such modifications, permutations, additions and sub-combinations as are consistent with the broadest interpretation of the specification as a whole.

### Interpretation of Terms

Unless the context clearly requires otherwise, throughout the description and the claims:
- "about" a stated value means a range of values that is within plus or minus 10% of the stated value (e.g., "about 10" means in the range of 9 to 11);
- "comprise", "comprising", and the like are to be construed in an inclusive sense, as opposed to an exclusive or exhaustive sense; that is to say, in the sense of "including, but not limited to";
- "herein", "above", "below", and words of similar import, when used to describe this specification, shall refer to this specification as a whole, and not to any particular portions of this specification;
- "or", in reference to a list of two or more items, covers all of the following interpretations of the word: any of the items in the list, all of the items in the list, and any combination of the items in the list;
- the singular forms "a", "an", and "the" also include the meaning of any appropriate plural forms.

Specific examples of systems, methods, and apparatus have been described herein for purposes of illustration. These are only examples. The technology provided herein can be applied to systems other than the example systems described above. Many alterations, modifications, additions, omissions, and permutations are possible within the practice of this invention, as long as they fall within the scope of the appended claims.

The scope of the claims should not be limited by the preferred embodiments set forth in the examples**.**

## Claims

1. A method for precipitating struvite or a struvite analog from an aqueous solution, the method comprising:
introducing the aqueous solution containing the dissolved materials into a reactor; and
introducing a source of magnesium (Mg) into the reactor in a quantity sufficient to cause the dissolved materials in the aqueous solution to precipitate into crystals,
wherein the source of Mg is introduced into the reactor in the form of particles of a Mg-containing material, and
wherein
- the source of Mg has a solubility in the aqueous solution of less than about 1 g/L,
- the source of Mg is introduced as a hydrated slurry, further comprising adding an acid to the hydrated slurry before introducing the hydrated slurry into the reactor,
and
- struvite or a struvite analog is precipitated from aqueous solution,
wherein about 0.4:1 molar equivalents of the acid is added to the hydrated slurry.

2. A method according to claim 1,
further comprising making the hydrated slurry by adding water to the source of Mg and soaking the source of Mg for a hydration time before introducing the hydrated slurry into the reactor,
and/or
wherein the source of Mg has a solubility in aqueous solvent of about 5 mg/L to about 500 mg/L, wherein preferably the source of Mg has a solubility in aqueous solvent of about 5 mg/L to about 150 mg/L
and/or
wherein the source of Mg has a particle size in the range of about 0.149 mm - 0.037 mm (100 mesh to 400 mesh).

3. A method according to claim 1 or 2, further comprising maintaining the pH of the aqueous solution at a pH greater than about 7,
wherein
the pH of the aqueous solution preferably is maintained by adding an acid or a base to the hydrated slurry
and/or
the pH of the aqueous solution preferably is maintained by controlling the amount of the source of Mg present in the aqueous solution.

4. A method according to any one of claims 1 to 3, further comprising introducing the source of Mg into the reactor at a preset timed interval,
wherein the preset timed interval preferably is about 30 seconds to about 5 minutes.

5. A method according to any one of claims 1 to 4, wherein the source of Mg comprises a low solubility source of Mg, the low solubility source of Mg comprises one or more of: MgO, Mg(OH)₂, and a magnesium carbonate,
wherein the magnesium carbonate preferably comprises one or more of anhydrous salt magnesite (MgCO₃), barringtonite (MgCO₃•2H₂O), nesquehonite (MgCO₃•3H₂O), lansfordite (MgCO₃•5H₂O), artinite (MgCO₃•Mg(OH)2•3H₂O), hydromagnesite (4 MgCO₃Mg(OH)2•4H₂O), dypingite (4 MgCO₃Mg(OH)2•5H₂O), dolomitic lime, and limestone
and/or
wherein the source of Mg preferably comprises a high solubility source of Mg and a low solubility source of Mg, the high solubility source of Mg comprises MgCl₂ or MgSO₄ and the low solubility source of Mg comprises one or more of: MgO, Mg(OH)₂, and a magnesium carbonate.

6. A method according to claim 5, wherein the low solubility source of Mg comprises MgO,
wherein the MgO is prepared at a calcination temperature for a period of time sufficient to produce MgO particles and the calcination temperature is in the range of about 600°C to about 1,200°C,
wherein the period of time preferably is in the range of about 1 to 3 hours.

7. A method according to any one of claims 1 to 6,
wherein the acid is one or more of: hydrochloric acid (HCl) and sulphuric acid (H₂SO₄) and nitric acid
and/or
wherein the acid is acetic acid, citric acid or oxalic acid.

8. A method according to any one of claims 1 to 7, wherein the source of Mg is reacted with the aqueous solution for a reaction time of less than about 60 minutes.

9. A method according to any one of claims 1 to 8, wherein the reactor tank is operated under high crystal growth conditions,
wherein the loading is about 5 g PO4-P/min/m3 or more in the reactor tank,
wherein preferably the loading is 50 g PO4-P/min/m3 or more in the reactor tank or is 250 g PO4-P/min/m3 or more in the reactor tank.

10. A method according to any one of claims 1 to 9, wherein the aqueous solution has a phosphorus concentration in the range of about 40 mg/L to about 10,000 mg/L.

## Patentansprüche

1. Verfahren zum Ausfällen von Struvit oder einem Struvit-Analogon aus einer wässrigen Lösung, wobei das Verfahren umfasst:
Einleiten der wässrigen Lösung, welche die gelösten Stoffe enthält, in einen Reaktor; und
Einleiten einer Magnesiumquelle (Mg) in den Reaktor in einer Menge, die ausreicht, um die gelösten Stoffe in der wässrigen Lösung zu Kristallen ausfallen zu lassen,
wobei die Mg-Quelle in Form von Partikeln eines Mg-haltigen Materials in den Reaktor eingeleitet wird, und
wobei
• die Mg-Quelle eine Löslichkeit in der wässrigen Lösung von weniger als etwa 1 g/L aufweist,
• die Mg-Quelle als eine hydratisierte Aufschlämmung eingeleitet wird, ferner umfassend das Zugeben einer Säure zu der hydratisierten Aufschlämmung, bevor die hydratisierte Aufschlämmung in den Reaktor eingeleitet wird,
und
• Struvit oder ein Struvit-Analogon aus wässriger Lösung ausgefällt wird,
wobei etwa 0,4:1 Moläquivalente der Säure zu der hydratisierten Aufschlämmung zugegeben werden.

2. Verfahren nach Anspruch 1,
ferner umfassend das Herstellen der hydratisierten Aufschlämmung durch Zugeben von Wasser zu der Mg-Quelle und Einweichen der Mg-Quelle für eine Hydratationszeit, bevor die hydratisierte Aufschlämmung in den Reaktor eingeleitet wird,
und/oder
wobei die Mg-Quelle eine Löslichkeit in wässrigem Lösungsmittel von etwa 5 mg/L bis etwa 500 mg/L aufweist, wobei die Mg-Quelle bevorzugt eine Löslichkeit in wässrigem Lösungsmittel von etwa 5 mg/L bis etwa 150 mg/L aufweist
und/oder
wobei die Mg-Quelle eine Partikelgröße im Bereich von etwa 0,149 mm bis 0,037 mm (100 Mesh bis 400 Mesh) aufweist.

3. Verfahren nach Anspruch 1 oder 2, ferner umfassend das Aufrechterhalten des pH-Werts der wässrigen Lösung bei einem pH-Wert von größer als etwa 7,
wobei
der pH-Wert der wässrigen Lösung bevorzugt durch Zugeben einer Säure oder einer Base zu der hydratisierten Aufschlämmung aufrechterhalten wird
und/oder
der pH-Wert der wässrigen Lösung bevorzugt durch Steuern der Menge der in der wässrigen Lösung vorhandenen Mg-Quelle aufrechterhalten wird.

4. Verfahren nach einem der Ansprüche 1 bis 3, ferner umfassend das Einleiten der Mg-Quelle in den Reaktor in einem voreingestellten Zeitintervall,
wobei das voreingestellte Zeitintervall bevorzugt etwa 30 Sekunden bis etwa 5 Minuten beträgt.

5. Verfahren nach einem der Ansprüche 1 bis 4, wobei die Mg-Quelle eine schwerlösliche Mg-Quelle umfasst, wobei die schwerlösliche Mg-Quelle eines oder mehrere von: MgO, Mg(OH)₂ und einem Magnesiumcarbonat umfasst,
wobei das Magnesiumcarbonat bevorzugt eines oder mehrere von wasserfreiem Salz Magnesit (MgCO₃), Barringtonit (MgCO₃·2H₂O), Nesquehonit (MgCO₃·3H₂O), Lansfordit (MgCO₃·5H₂O), Artinit (MgCO₃·Mg(OH)₂·3H2O), Hydromagnesit (4 MgCO₃Mg(OH)₂·4H₂O), Dypingit (4 MgCO₃Mg(OH)₂·5H₂O), dolomitischem Kalk und Kalkstein umfasst
und/oder
wobei die Mg-Quelle bevorzugt eine leichtlösliche Mg-Quelle und eine schwerlösliche Mg-Quelle umfasst, wobei die leichtlösliche Mg-Quelle MgCl₂ oder MgSO₄ umfasst und die schwerlösliche Mg-Quelle eines oder mehrere von: MgO, Mg(OH)₂ und einem Magnesiumcarbonat umfasst.

6. Verfahren nach Anspruch 5, wobei die schwerlösliche Mg-Quelle MgO umfasst,
wobei das MgO bei einer Kalzinierungstemperatur über einen Zeitraum hergestellt wird, der ausreicht, um MgO-Partikel herzustellen, und die Kalzinierungstemperatur im Bereich von etwa 600 °C bis etwa 1200 °C liegt,
wobei der Zeitraum bevorzugt im Bereich von etwa 1 bis 3 Stunden liegt.

7. Verfahren nach einem der Ansprüche 1 bis 6,
wobei die Säure eine oder mehrere von: Salzsäure (HCl) und Schwefelsäure (H2SO4) und Salpetersäure ist
und/oder
wobei die Säure Essigsäure, Zitronensäure oder Oxalsäure ist.

8. Verfahren nach einem der Ansprüche 1 bis 7, wobei die Mg-Quelle mit der wässrigen Lösung für eine Reaktionszeit von weniger als etwa 60 Minuten zur Reaktion gebracht wird.

9. Verfahren nach einem der Ansprüche 1 bis 8, wobei der Reaktorbehälter unter Bedingungen für hohes Kristallwachstum betrieben wird,
wobei die Beladung etwa 5 g PO4-P/min/m3 oder mehr im Reaktorbehälter beträgt,
wobei die Beladung bevorzugt 50 g PO4-P/min/m3 oder mehr im Reaktorbehälter oder 250 g PO4-P/min/m3 oder mehr im Reaktorbehälter beträgt.

10. Verfahren nach einem der Ansprüche 1 bis 9, wobei die wässrige Lösung eine Phosphorkonzentration im Bereich von etwa 40 mg/L bis etwa 10000 mg/L aufweist.

## Revendications

1. Procédé de précipitation de struvite ou d'un analogue de struvite à partir d'une solution aqueuse, le procédé comprenant :
l'introduction de la solution aqueuse contenant les matières dissoutes dans un réacteur ; et
l'introduction d'une source de magnésium (Mg) dans le réacteur en une quantité suffisante pour amener les matières dissoutes dans la solution aqueuse à se précipiter en cristaux,
dans lequel la source de Mg est introduite dans le réacteur sous la forme de particules d'une matière contenant du Mg, et
dans lequel
- la source de Mg présente une solubilité dans la solution aqueuse inférieure à environ 1 g/L,
- la source de Mg est introduite sous forme de suspension hydratée, comprenant en outre l'ajout d'un acide à la suspension hydratée avant l'introduction de la suspension hydratée dans le réacteur,
et
- la struvite ou un analogue de struvite est précipité(e) à partir d'une solution aqueuse,
dans lequel environ 0,4:1 équivalents molaires de l'acide est ajouté à la suspension hydratée.

2. Procédé selon la revendication 1,
comprenant en outre la réalisation de la suspension hydratée en ajoutant de l'eau à la source de Mg et en faisant tremper la source de Mg pendant un temps d'hydratation avant d'introduire la suspension hydratée dans le réacteur,
et/ou
dans lequel la source de Mg présente une solubilité dans un solvant aqueux d'environ 5 mg/L à environ 500 mg/L, dans lequel de préférence la source de Mg présente une solubilité dans un solvant aqueux d'environ 5 mg/L à environ 150 mg/L
et/ou
dans lequel la source de Mg présente une taille de particule dans la plage d'environ 0,149 mm à 0,037 mm (100 mesh à 400 mesh).

3. Procédé selon la revendication 1 ou 2, comprenant en outre le maintien du pH de la solution aqueuse à un pH supérieur à environ 7,
dans lequel
le pH de la solution aqueuse est de préférence maintenu par l'ajout d'un acide ou d'une base à la suspension hydratée
et/ou
le pH de la solution aqueuse est de préférence maintenu en contrôlant la quantité de la source de Mg présente dans la solution aqueuse.

4. Procédé selon l'une quelconque des revendications 1 à 3, comprenant en outre l'introduction de la source de Mg dans le réacteur à un intervalle de temps prédéfini,
dans lequel l'intervalle de temps prédéfini est de préférence d'environ 30 secondes à environ 5 minutes.

5. Procédé selon l'une quelconque des revendications 1 à 4, dans lequel la source de Mg comprend une source de Mg à faible solubilité, la source de Mg à faible solubilité comprenant un ou plusieurs parmi : MgO, Mg(OH)₂ et un carbonate de magnésium,
dans lequel le carbonate de magnésium comprend de préférence une ou plusieurs parmi la magnésite de sel anhydre (MgCO₃), la barringtonite (MgCO₃•2H₂O), la nesquéhonite (MgCO₃•3H₂O), la lansfordite (MgCO₃•5H₂O), l'artinite (MgCO₃•Mg(OH)₂•3H₂O), l'hydromagnésite (4 MgCO₃Mg(OH)₂•4H₂O), dypingite (4 MgCO₃Mg(OH)₂•5H₂O), la chaux dolomitique, et le calcaire
et/ou
dans lequel la source de Mg comprend de préférence une source de Mg à haute solubilité et une source de Mg à faible solubilité, la source de Mg à haute solubilité comprend du MgCl₂ ou du MgSO₄ et la source de Mg à faible solubilité comprend un ou plusieurs parmi : MgO, Mg(OH)₂ et un carbonate de magnésium.

6. Procédé selon la revendication 5, dans lequel la source de Mg à faible solubilité comprend du MgO,
dans lequel le MgO est préparé à une température de calcination pendant une période suffisante pour produire des particules de MgO et la température de calcination se situe dans la plage d'environ 600 °C à environ 1 200 °C,
dans lequel la période se situe de préférence dans la plage d'environ 1 à 3 heures.

7. Procédé selon l'une quelconque des revendications 1 à 6,
dans lequel l'acide est un ou plusieurs parmi : l'acide chlorhydrique (HCl) et l'acide sulfurique (H₂ SO₄) et l'acide nitrique
et/ou
dans lequel l'acide est de l'acide acétique, de l'acide citrique ou de l'acide oxalique.

8. Procédé selon l'une quelconque des revendications 1 à 7, dans lequel la source de Mg est mise en réaction avec la solution aqueuse pendant un temps de réaction inférieur à environ 60 minutes.

9. Procédé selon l'une quelconque des revendications 1 à 8, dans lequel le réservoir de réacteur est exploité dans des conditions de croissance cristalline élevée,
dans lequel le chargement est d'environ 5 g PO4-P/min/m3 ou plus dans le réservoir de réacteur,
dans lequel de préférence le chargement est de 50 g PO4-P/min/m3 ou plus dans le réservoir de réacteur ou est de 250 g PO4-P/min/m3 ou plus dans le réservoir de réacteur.

10. Procédé selon l'une quelconque des revendications 1 à 9, dans lequel la solution aqueuse présente une concentration en phosphore dans la plage d'environ 40 mg/l à environ 10 000 mg/l.
